# EUROPEAN PATENT SPECIFICATION

(11) **EP 1 025 961 B1**
(45) Date of publication and mention of the grant of the patent: **09.06.2004**
(21) Application number: 00300564.2
(22) Date of filing: 26.01.2000
(51) Int. Cl.: B25F 5/02

(54) **Battery powered hand guided power tool**
Batteriebetriebene Handwerkzeugmaschine
Outil à main alimenté par batterie

(30) Priority: 29.01.1999 DE 19905086
(43) Date of publication of application: 09.08.2000
(73) Proprietor: Black & Decker Inc., Newark Delaware 19711 (US)
(72) Inventor: Buchholz, Achim, 655549 Limburg (DE); Nemetz, Uwe, 65597 Nauheim (DE)
(74) Representative: Shaya, Darrin Maurice

(56) References cited:
- DE-A- 3 502 449
- DE-A- 19 521 423
- DE-U- 9 319 361
- US-A- 5 553 675

## Description

The invention relates to a battery-powered, hand-guided power tool, in particular to a hammer, having a tool housing that contains an electric motor, forms a gripping portion and has a rail-and-channel arrangement for the releasable mounting of a rechargeable battery pack, and in which a locking device is provided comprising at least one latch element movable against spring force out of a locking position in which the battery pack is locked in its operative position to the tool housing, the latch element in its locking position being located in engagement with a latch recess that is provided in the housing of the battery pack in the region of the part formed thereon of the rail-and-channel arrangement and which latch element is movable substantially perpendicularly to the direction of operation of the rail-and-channel arrangement.

In a known power tool of that kind (DE 195 21 423 A1), which is in the form of a drilling hammer, the housing-side part of the rail-and-channel arrangement extends on the front side of the portion of the tool housing forming the rear hand grip and substantially at right angles to the longitudinal axis of the tool holder. In the lower part of the hand grip, there is a spring-loaded latch element which, in the locking position and with the battery housing inserted, engages in a latch recess of the battery housing and thus holds the battery pack in its operative position on the tool housing. The latch element is accessible through an opening at the lower end of the hand grip, so that the user is able to move it manually against the force of a compression spring out of the locking position into the release position.

Apart from the fact that the position of the opening in the hand grip is not especially ergonomically advantageous, and that it appears virtually impossible to hold the battery pack and support it against falling with one hand and to move the latch element into its release position with the same hand, the assembly of compression spring and latch element is also awkward. These two components have to be inserted, like many other components also, into one half-shell of the tool housing as the drilling hammer is being assembled, and be securely positioned by placing on and fixing the other half-shell of the tool housing. It is necessary here for a support to be formed in one half-shell for the latch element. When no battery pack is present, this support prevents the latch element from being pressed by the compression spring completely out of the through-opening through which the latch element comes into engagement with the inserted battery pack. Although this awkward mounting of spring and latch element in tool housings comprising half-shells is possible, such an assembly is not possible when the tool housing, or that part of the tool housing that receives the latch element, is in the form of a barrel-type housing, that is, consists of one piece and not of two half-shells.

The aim of the invention is to construct a power tool in such a way that the latch arrangement is simple to construct and to mount.

To solve that problem, a power tool of the kind mentioned in the introduction is so constructed in accordance with the invention that on the tool housing adjacent to the rail-and-channel arrangement there is provided a frame part that comprises at least one recess, for receiving a latch element which is movable against spring force from a locking position in which the latch element extends further from the recess into a release position in which the latch element is retracted further into the recess, and that laterally in relation to the recess an operating element in the form of a two-armed lever is pivotally mounted, a first arm of which lever is accessible for pivoting by hand and a second arm of which lever is in engagement with the latch element enabling the same to be moved between the locking position and the release position, the operating element supporting the latch element against being displaced completely out of the recess. The operating element is preferably in the form of a substantially L-shaped lever.

In the case of the power tool according to the invention, the latch element to be retained against spring pressure in the tool housing is therefore inserted into the recess for the latch element, normally together with the spring for biasing the latch element. Then the second arm of the operating element is brought into engagement with the latch element, for instance, by introducing the arm through a slit-shaped opening in the wall of the recess and inserting it into a laterally open engagement aperture of the latch element. When the operating element is then pivotally secured to the tool housing, it provides support for the latch element against the spring force acting thereon, for example, in that the second arm of the operating element is braced against the lower edge of the slit-shaped opening in the wall of the recess. When a tool housing comprising two half-shells is closed, or with a one-piece barrel-type housing, the latch element can thus be simply inserted from the outside and be fixed in position in the recess by mounting the operating element, so that further assembly work can then be carried out without the latch element having to be held in position by hand against spring force.

In order to be able to fix the operating element in a simple manner so as to pivot after its second arm has been brought into engagement with the latch element, the pivot axis of the operating element can be formed by two pivot pins, that are snapped into bearing sleeves provided on the tool housing. To facilitate this snapping-in operation, the bearing sleeves can be open on their side remote from the recess. This construction allows in one simple operation the second arm of the operating element to engage with the latch element and, without the aid of additional tools, the operating element to be pivotally fastened to the tool housing.

After mounting the latch element and the operating element, a cover can be fastened laterally to the tool housing; the cover has a through-opening through which the first or user accessible arm of the operating element is accessible, whilst the cover covers the remainder of the pivoting arrangement of the operating element and thus protects it against external influences and damage, and prevents the operating element from becoming detached from its pivot mounting during use of the power tool.

The cover can additionally form part of the rail-and-channel arrangement, for example, comprise the rails that come into engagement with channels of complementary form in the battery housing.

In a specially preferred construction, two latch elements arranged in adjacent recesses are provided, and the first arms or externally accessible arms of the operating elements are located in opposite sides of the tool housing. Security against accidental release of the battery pack is therefore increased, since the pack can only be unlocked when the operating elements associated with both latch elements are pivoted simultaneously. For that purpose, the first or externally accessible arms of the operating elements are preferably positioned so that, by gripping the corresponding region of the tool with one hand, they can be pivoted using a finger and/or thumb of that hand.

The tool-side part of the rail-and-channel arrangement is preferably provided in front of a grip region of the tool housing which grip region extends downwardly in the normal functional position of the power tool, and which rail-and channel arrangement extends at least approximately parallel to the longitudinal axis of the tool holder of the power tool, so that at least one latch element is movable, approximately perpendicularly to the longitudinal axis of the tool holder, between its locking position and its release position.

The invention will now be explained with reference to the Figures showing an exemplary embodiment. In the Figures:
Figure 1 shows, in side view, a drilling hammer with battery pack located in its operative position;
Figure 2 shows in a partial view the inserted battery pack and parts of the drilling hammer from Figure 1;
Figure 3 shows a section along the line III-II of Figure 1 through the motor housing of the drilling hammer, but with the omission of the parts of motor and gear arrangement normally present in this region;
Figure 4 is an exploded view of the motor housing, with parts connected thereto, and the battery pack;
Figure 5 shows the parts from Figure 4 in an exploded, different view;
Figure 6 shows a part of one half-shell of the grip housing of the drilling hammer from Figure 1, a half-shell of the housing of the battery pack used and parts of the motor housing;
Figure 7 shows in a partial view the engagement of the tool-side contacts and the battery-side contacts when the battery pack is locked in its operative position;
Figure 8 shows the drilling hammer with unlocked battery pack, in a view corresponding to Figure 1;
Figure 9 is a view corresponding to Figure 2, but with the battery pack unlocked;
Figure 10 is a view corresponding to Figure 6, but with the battery pack unlocked;
Figure 11 is a view corresponding to Figure 7, showing the position of the tool-side contacts and the battery-side contacts with the battery pack unlocked.

The drilling hammer illustrated has a tool housing, which is made up from a barrel-like motor housing 1, open towards the rear end, and adjoining this at the rear a grip housing formed from two half-shells 2, 3. An electric motor (not shown) and a pneumatic hammer mechanism, not illustrated, are normally located in the tool housing. Fixed at the front end of the drilling hammer is a tool holder 7 which is fixed in the customary manner on a spindle, not represented; a hammer bit, not represented, is inserted in the tool holder and in operation, in the manner customary for drilling hammers, is loaded by impacts from the hammer mechanism and/or is driven in rotation.

The grip housing 2, 3 forms a grip opening 4, into which a switch actuator 5 for activating the electric motor extends. The motor is powered by a battery pack 50, which is detachably secured to the drilling hammer in a manner to be described hereinafter.

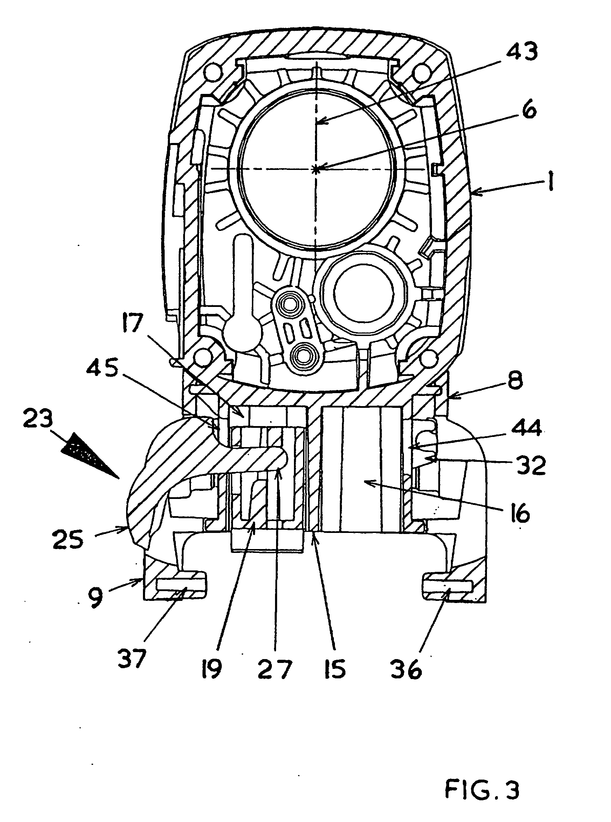

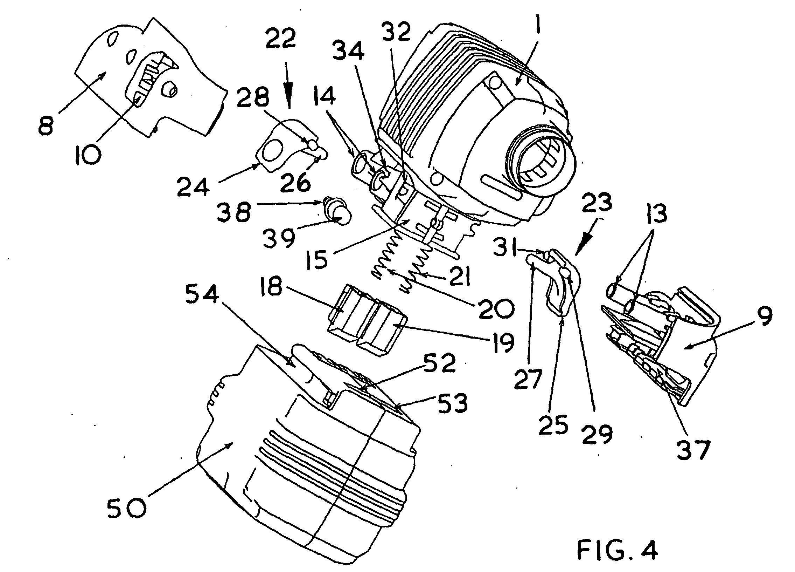

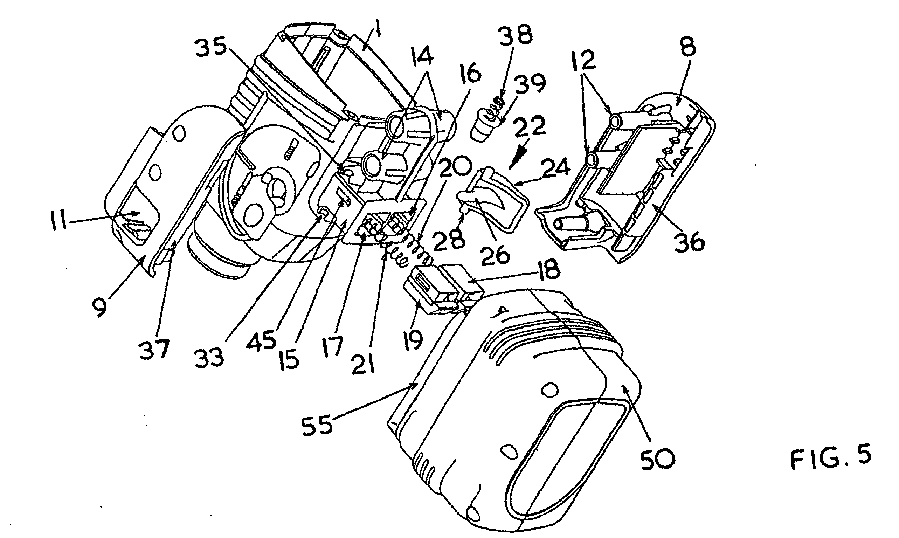

As is especially apparent from Figures 3 to 5, on its underside the motor housing 1 has an integrally formed frame part 15, which at its rear region has integrally formed connecting sleeves 14 and in its front region has two recesses 16, 17 that are separated by a transverse wall that lies in the central plane 43 (Figure 3) of the tool housing 1, 2, 3, in which also the longitudinal axis 6 of the tool housing that coincides with the axis of rotation of the tool holder 7 is located.

Compression springs 20, 21 and latch elements 18, 19 are inserted in the recesses 16, 17, which are in the form of blind bores. In the outer side walls of the recesses 16, 17 there is a respective slit-shaped through-opening 44, 45. Into each of these through-openings extends the inner arm 26, 27 respectively of an operating element 22, 23, respectively, which operating element is in the form of a substantially L-shaped two-armed lever and, formed in one piece therewith, has a respective front pivot pin 28, 29 and a respective rear pivot pin 30, 31. The pivot pins 26, 28 and 29, 31 are snapped into front and rear bearing sleeves 32, 34 and 33, 35 respectively, integrally formed with the frame part 15 and open towards the outside, so that the operating element 22, 23 is pivotally mounted on the frame part.

Secured laterally to the frame 15 are covers 8, 9, which have a respective through-opening 10, 11 into which the respective outer arm 24, 25 of the respective operating element 22, 23 extends, so that the outer face of that arm 24, 25 is accessible from the outside. The covers 8, 9 have inwardly projecting connecting sockets 12, 13, which in the mounted state extend into the connecting sleeves 14. By means of screws, not illustrated, inserted in the connecting sockets, which screws come into engagement with internal threads in the connecting sleeves, the covers 8, 9 are releasably held on the frame part, and they cover in particular the pivot pins 28, 30, and 29, 31 of the operating elements 22, 23 respectively and the associated bearing sleeves 32, 34 and 33, 35 respectively and constitute a visual downward continuation of the motor housing 1.

It will be noted that, by means of this construction, the latch elements 18, 19 can be very easily mounted and held within the recesses 16, 17. If a spring and the associated latch element is inserted into the recess, then, with the latch element fixedly held, the inner arm 26, 27 of the associated operating element 22, 23 is pushed through the respective slit-shaped through-opening 44, 45 in the side wall of the respective recess 16, 17 and into a lateral slit-shaped opening of the respective latch element 18, 19. Just the fact of this engagement prevents the compression spring 20, 21 from being able to push its associated latch element 18, 19 out of the recess 16, 17 respectively. The pivot pins 28, 30 and 29, 31 of the operating element 22, 23 respectively are snapped into the bearing sleeves 32, 34 and 33, 35 respectively, so that the operating elements 22, 23 are positioned in their position apparent in Figure 3 for the operating element 23. In that position, the compression spring 20, not illustrated in Figure 3, presses the latch element 19 downwards and against the inner arm 27 of the operating element 23 extending into the opening in the latch element 19, so that the operating element 23 is biassed, causing it to pivot clockwise. This pivoting movement is limited by contact of the inner arm 27 against the lower edge of the slit-shaped through-opening 45 provided in the frame part 15, that is, the latch element 19 is able to protrude downwards out of the recess 17 only as far as the lowered latched position illustrated in Figure 3. The same applies to the latch element 18, not illustrated in Figure 3, which is inserted in the recess 16 and co-operates with the operating element 22.

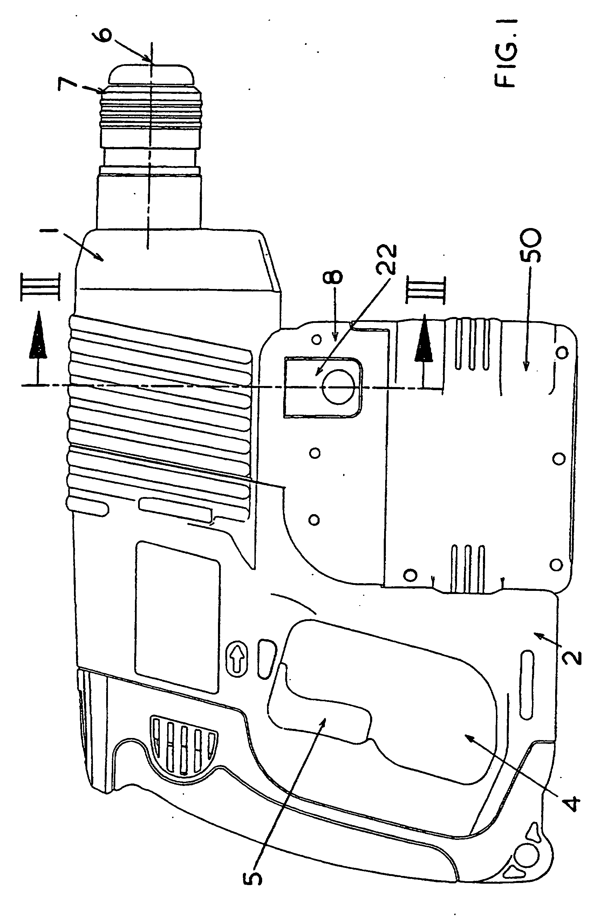

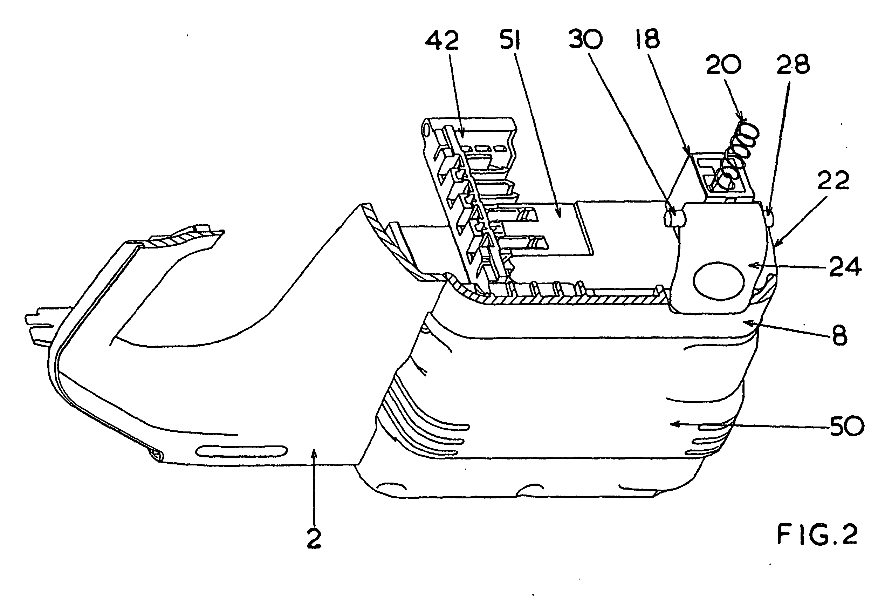

At their lower ends, the covers 8, 9 form inwardly projecting rails 36, 37 extending at least approximately parallel to the longitudinal axis 6, which serve as guide and retaining rails for pushing on and mounting the battery pack 50. On its upper side, the battery pack has channels 54, 55 of complementary form, which are open at the rear end so that the front ends of the rails 36, 37 enter the channels 54, 55 and the battery pack 50 can be pushed along the rails 36, 37 to an end position in which, as is apparent from Figures 1 and 2, the rear wall of the battery pack 50 lies against a front surface formed by the two half-shells 2, 3 of the grip housing. The latch elements are of wedge-shaped construction at their lower ends and as the battery pack 50 is inserted are pressed by the upper surface thereof, against the action of the compression springs 20, 21, back into the recesses 16, 17. In the end position of the battery pack 50 the latch elements 18, 19 snap into latch recesses 52, 53 formed in the upper surface of the battery pack 50 and lock the battery pack 50 against forward displacement out of this operative or end position.

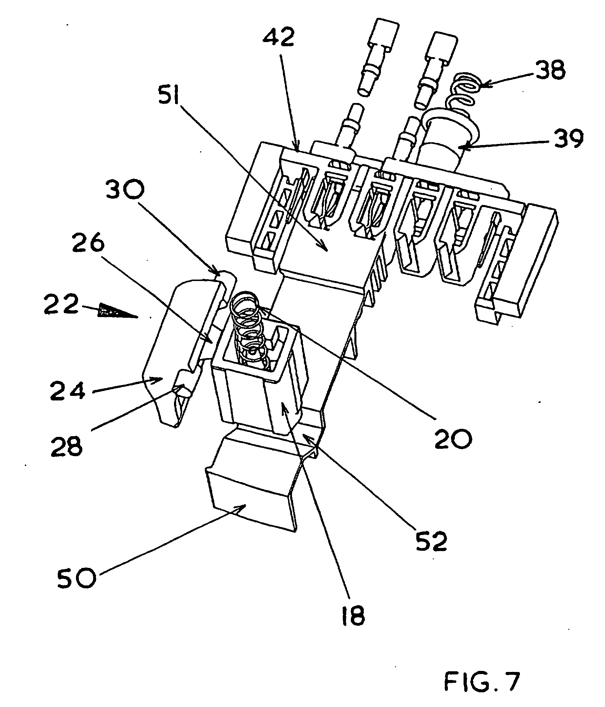

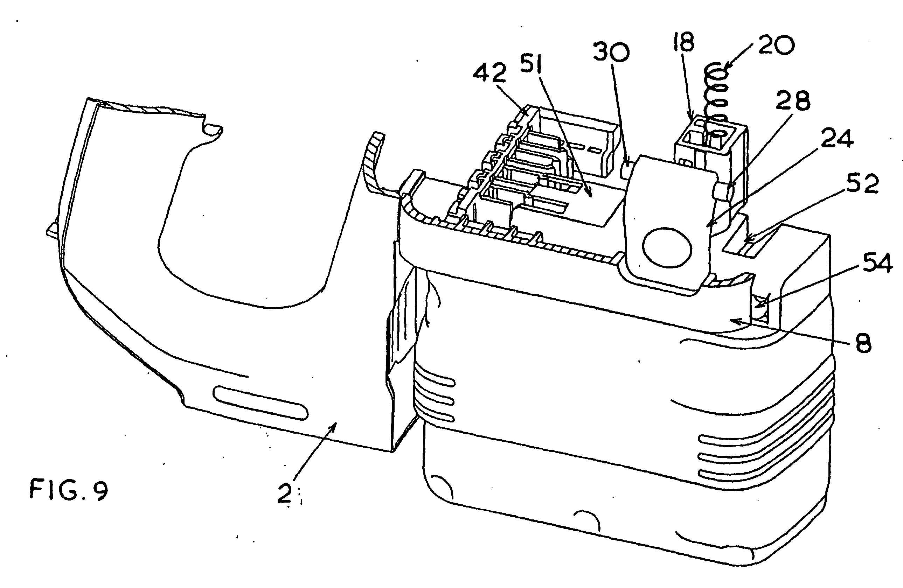

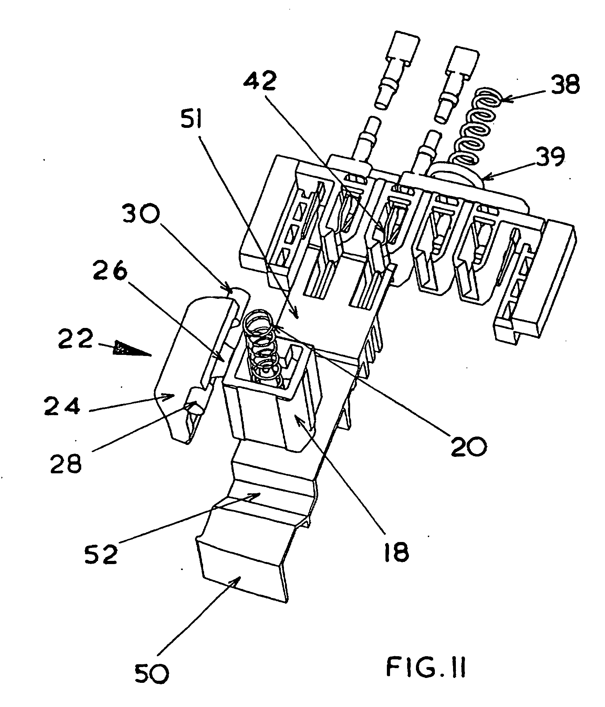

As is apparent from Figures 2, 6, 9 and 10, behind the frame part 15, contacts 42, also illustrated in Figures 7 and 11, are fastened to the motor housing 1, and are electrically connected via connections to the different components inside the tool housing. These contacts 42 are arranged in a frame arrangement open towards the front. Corresponding contacts 51 are located on the upper side of the battery pack 50 in the rear region thereof, and are mounted in a frame arrangement open at the rear. In the position shown in Figures 2, 6 and 7, that is, the locked or operative position of the battery pack 50 according to Figures 1, 2 and 6, are in electrically conducting engagement with the tool-side contacts 42.

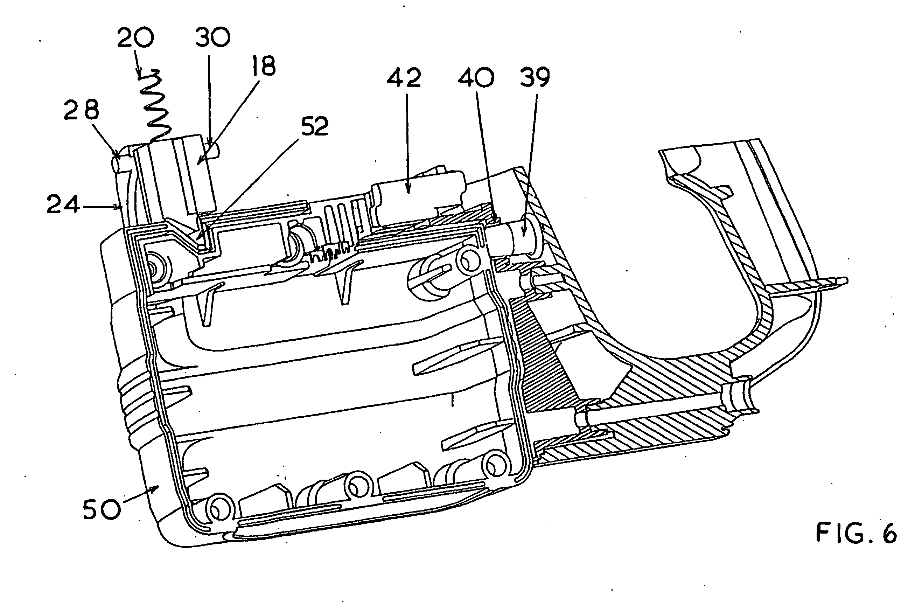

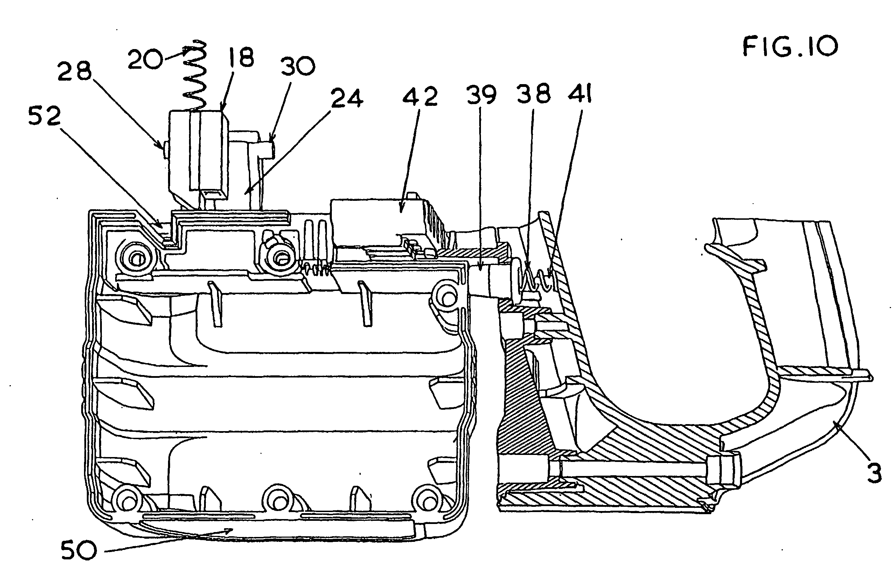

In the upper end region of the bearing surface of the tool housing for the rear end face of the battery pack 50, there is an aperture 40, through which an approximately thimble-shaped cap 39 extends, having at its rear end an outwardly directed shoulder, the external diameter of which is larger than the diameter of the aperture 40, so that the cap 39 is unable to escape from the housing through the aperture 40. The cap 39 is biassed by a helical spring 38, which sits on a supporting pin 41 (See Figure 10) formed in one piece with the wall of the grip housing 1, 2 lying opposite the aperture 40. The helical spring bears against this wall of the grip housing to effect a forward displacement of the cap 39, that is, to effect a displacement towards a position in which the shoulder of the cap 39 bears against the wall region surrounding the aperture 40. As shown in Figure 6, with the battery pack 50 inserted and located in the locked or operative position, the cap 39 is pushed as far as possible into the tool housing with the helical spring 38 fully compressed.

In order to separate the battery pack 50 in its operative position from the drilling hammer, the user grips the covers 8, 9 and the front region of the battery pack 50 with one hand from the front, and presses, for instance with his thumb and forefinger, the outer arms 24, 25 of the operating elements 22 and 23 inwards. This causes the operating elements to pivot about their pivot pins 28, 30 and 29, 31 respectively and the latch elements 18, 19 are lifted up, against the force of the compression springs 20, 21, that is, they are moved further into the recesses 16, 17, until the lower ends of the latch elements 18, 19 are retracted from the latch recesses 52, 53 of the battery pack 50. As the latch elements 18, 19 release the battery pack 50, the battery pack 50 is pressed as a consequence of the force of the helical spring 38, which presses the cap 39 against the battery pack 50, forwardly along the rails 36, 37. Just a slight displacement is sufficient to ensure that the latch elements 18, 19 do not re-enter the latch recesses 52, 53 of the battery pack 50 after the operating elements 22, 23 have been released. Instead the latch elements abut the upper surface of the battery pack 50. The helical spring 38 not only effects such a slight displacement, but on release or retraction of the latch elements 18, 19 shifts the battery pack 50 such a distance along the rails 36 and 37 provided on the tool housing that the battery-side contacts 51 safely disengage from the tool-side contacts 42. Accordingly, the displacement of the battery pack 50 by the helical spring 38 effects not only a mechanical disengagement of the battery pack 50, but also causes the electrical connection between battery pack 50 and power tool to be safety interrupted. For that purpose, the spring 38 has a restoring force that is greater than the weight of the battery pack 50, so that a corresponding displacement of the battery pack can be reliably effected. Thus, even when the user unlocks the battery pack 50 with the tool holder 7 of the power tool pointed upwardly the battery pack 50 is moved by the spring 38 against gravity along the vertically positioned rails 36, 37. Moreover, the travel of the spring 38 between the fully compressed position shown in Figure 6 and the position in which the outwardly directed shoulder of the cap 39 is supported against the wall region of the tool housing surrounding the aperture 40 (Figure 10), is greater than the length over which the battery-side contacts 51 in the operative position of the battery pack 50 shown in Figures 1, 2 and 6 are in engagement with the tool-side contacts 42. As the latch elements 18, 19 are displaced from the locked position shown in Figure 6 into the release position shown in Figure 10, in any orientation of the power tool the spring 38 accordingly reliably effects a displacement of the battery pack 50 along the rails 36, 37, such that a separation of battery-side and tool-side contacts 51, 42 is effected.

For the rest, the travel of the spring 38 between the fully compressed position (Figure 6) and the position according to Figure 10, in which the outwardly directed shoulder of the cap 39 rests against the wall region surrounding the aperture 40, should not be so large that the battery pack 50 is moved into a position in which it is no longer reliably held on the rails 36, 37, but is virtually "shot out" of its mounting on the rails. It is therefore advantageous if the travel of the spring 38 is no greater than half the length of the battery pack in the region of the rail and channel arrangement 36, 37, 54, 55 in the direction of the longitudinal extent of the channels 54, 55, so that, in the state displaced by the spring 38, the battery pack 50 still sits on at least half the longitudinal extent of the rails 35, 36.

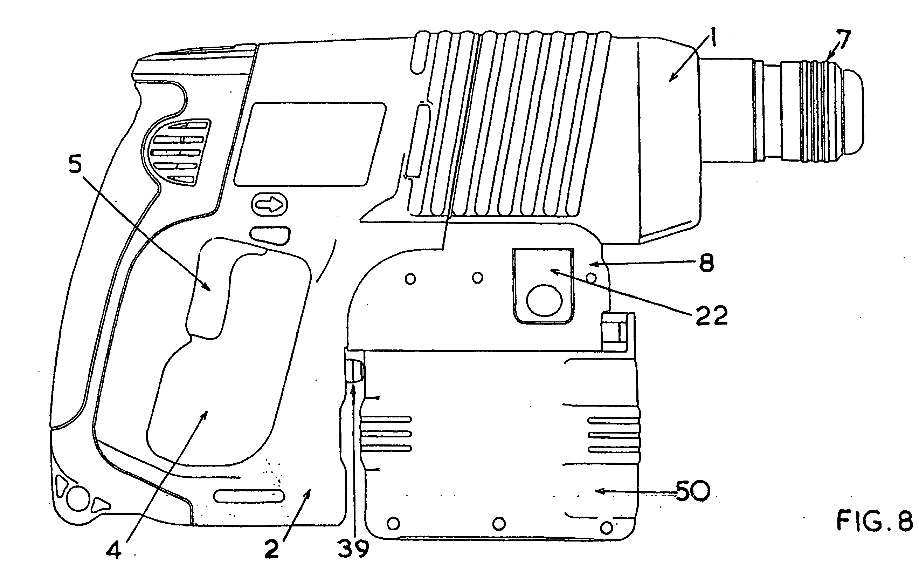

When the user inserts the battery pack 50 into the drilling hammer, he has to displace the cap 39 suitably backwards, and compress the spring 38 to move the battery pack 50 into the position in which the latch elements 18, 19 lock into the latch recesses 52, 53 of the battery pack 50. In that position, the battery-side contacts 51 are then also electrically connected to the tool-side contacts 42. If, however, the user fails to push in the battery pack 50 until the latch elements lock in, on being released the battery pack will be displaced by the action of the spring 38 into the position shown in Figures 8 and 10, so that this error is obvious to the user. Moreover, there is no chance whatsoever that the battery pack 50 can be electrically connected with the drilling hammer and can set this in operation when the battery pack 50 is not locked in its operative position by engagement of the latch elements 18, 19.

## Claims

1. Battery-powered, hand-guided power tool, in particular a hammer, having a tool housing (1, 2, 3) that contains an electric motor, forms a gripping portion (2, 3, 4) and has a rail-and-channel arrangement (36, 37, 54, 55) for releasable mounting of a rechargeable battery pack (50), in which tool housing a locking device is provided comprising at least one latch element (18; 19) movable against spring force out of a locking position in which the battery pack (50) is locked in its operative position on the tool housing (1, 2, 3), the latch element in its locking position being located in engagement with a latch recess (52; 53) that is provided in the housing of the battery pack (50) in the region of the part (54, 55) formed thereon of the rail-and-channel arrangement (36, 37, 54, 55) and which latch element is movable substantially perpendicularly to the direction of operation of the rail-and-channel arrangement (36, 37, 54, 55), wherein on the tool housing (1, 2, 3), adjacent to the rail-and-channel arrangement (36, 37, 54, 55), there is provided a frame part (15) that comprises at least one recess (16; 17) for receiving a latch element (18, 19) which is movable against spring force from a locking position in which the latch element extends further from the recess into a release position in which the latch element is retracted further into the recess, **characterised in that** laterally in relation to the recess (16; 17) an operating element (22; 23) in the form of a two-armed lever is pivotally mounted, a first arm (24; 25) of which lever is accessible for pivoting by hand and the second arm (26; 27) of which lever is in engagement with the latch element (18; 19) enabling the same to be moved between the locking and release positions, the operating element (22, 23) supporting the latch element (18; 19) against being displaced completely out of the recess (16; 17).

2. Power tool according to claim 1, **characterised in that** the operating element (22; 23) is in the form of an L-shaped lever.

3. Power tool according to claim 1 or 2, **characterised in that** the second arm (26; 27) of the operating element (22; 23) extends through a slit-shaped opening (44; 45) in a wall of the recess (16; 17).

4. Power tool according to any one of claims 1 to 3, **characterised in that** the second arm (26; 27) of the operating element (22; 23) extends into a laterally open engagement aperture in the latch element (18; 19).

5. Power tool according to any one of claims 1 to 4, **characterised in that** the pivot axis of the operating element (22; 23) is formed by two pivot pins (28, 30; 29, 31), that are snapped into bearing sleeves (32, 34; 33, 35) provided on the tool housing (1, 2, 3).

6. Power tool according to claim 5, **characterised in that** the bearing sleeves (32, 34; 33, 35) are open on their side remote from the recess (16; 17).

7. Power tool according to any one of claims 1 to 6, **characterised in that** between the inner end of the latch element (18; 19) and the floor of the recess (16; 17) there is arranged a compression spring (20; 21).

8. Power tool according to any one of claims 1 to 7, **characterised in that** a cover (8; 9) is fastened laterally to the tool housing (1, 2, 3), which cover has a through-opening (10; 11) through which the first arm (24; 25) of the operating element (22; 23) is accessible.

9. Power tool according to claim 8, **characterised in that** the cover (8; 9) forms a part of the rail-and-channel arrangement (36, 37, 54, 55).

10. Power tool according to any one of claims 1 to 9, **characterised in that** two latch elements (18; 19) are arranged in adjacent recesses (16, 17) and each latch element has an associated operating element (22, 23) arranged such that the first arms (24, 25) of the operating elements (22, 23) are located on opposite sides of the tool housing (1,2, 3).

11. Power tool according to any one of claims 1 to 10, **characterised in that** the tool-side part (36, 37) of the rail-and-channel arrangement (36, 37, 54, 55) is provided in front of a grip region (2, 3, 4) of the tool housing (1, 2, 3) which grip region extends downwardly in the normal functional position of the power tool, and which rail-and-channel arrangement extends at least approximately parallel to the longitudinal axis (6) of the tool holder (7) of the power tool.

## Patentansprüche

1. Batteriegetriebenes, handgeführtes Elektrowerkzeug, insbesondere Bohrhammer, mit einem Werkzeuggehäuse (1, 2, 3), das einen Elektromotor enthält, einen Griffbereich (2, 3, 4) ausbildet und eine Schienen- und Nutanordnung (36, 37, 54, 55) zur lösbaren Halterung einer wiederaufladbaren Batterieeinheit (50) aufweist, wobei im Werkzeuggehäuse (1, 2, 3) eine Verriegelungseinrichtung vorgesehen ist, die mindestens ein von Hand gegen Federkraft aus einer die Batterieeinheit (50) in ihrer Betriebsstellung am Werkzeuggehäuse (1, 2, 3) verriegelnden Riegelstellung bewegbares Riegelelement (18; 19) aufweist, das in der Riegelstellung in Eingriff mit einer Riegelvertiefung (52; 53) steht, die im Gehäuse der Batterieeinheit (50) im Bereich des an diesem ausgebildeten Teils (54, 55) der Schienen- und Nutanordnung (36, 37, 54, 55) vorgesehen ist, und das im wesentlichen normal zur Arbeitsrichtung der Schienen- und Nutanordnung (36, 37, 54, 55) bewegbar ist, wobei am Werkzeuggehäuse (1, 2, 3) benachbart zur Schienen- und Nutanordnung (36, 37, 54, 55) ein Rahmenteil (15) vorgesehen ist, das mindestens eine Aussparung (16; 17) zur Aufnahme eines Riegelelementes (18; 19) aufweist, das gegen Federkraft aus einer Riegelstellung, in der sich Riegelelement weiter aus der Aussparung erstreckt, in eine Freigebestellung bewegbar ist, in der das Riegelelement weiter in die Aussparung gezogen ist, **dadurch gekennzeichnet, daß** seitlich bezüglich der Aussparung (16; 17) ein Betätigungselement (22; 23) in Form eines zweiarmigen Hebels schwenkbar gehaltert ist, dessen erster Arm (24; 25) zur Verschwenkung von Hand zugänglich ist und dessen zweiter Arm (26; 27) in eine Verlagerung des Riegelelementes (18; 19) zwischen der Riegel- und der Freigabestellung ermöglichendem Eingriff mit diesem steht, wobei das Betätigungselement (11; 23) das Riegelelement (18; 19) gegen vollständige Verlagerung aus der Aussparung (16; 17) heraus abstützt.

2. Elektrowerkzeug nach Anspruch 1, **dadurch gekennzeichnet, daß** das Betätigungselement (22; 23) die Form eines L-förmigen Hebels hat.

3. Elektrowerkzeug nach Anspruch 1 oder 2, **dadurch gekennzeichnet, daß** sich der zweite Arm (26; 27) des Betätigungselementes (22; 23) durch eine schlitzförmige Öffnung (44; 45) in der Wand der Aussparung (16; 17) erstreckt.

4. Elektrowerkzeug nach einem der Ansprüche 1 bis 3, **dadurch gekennzeichnet, daß** sich der zweite Arm (26; 27) des Betätigungselementes (22; 23) in eine seitlich offene Eingriffsöffnung im Riegelelement (18; 19) erstreckt.

5. Elektrowerkzeug nach einem der Ansprüche 1 bis 4, **dadurch gekennzeichnet, daß** die Schwenkachse des Betätigungselementes (22; 23) durch zwei Schwenkzapfen (28, 30; 29, 31) gebildet ist, die in am Werkzeuggehäuse (1, 2, 3) vorgesehene Lagerschalen (32, 34; 33, 35) eingeschnappt sind.

6. Elektrowerkzeug nach Anspruch 5, **dadurch gekennzeichnet, daß** die Lagerschalen (32, 34; 33, 35) an ihrer der Aussparung (16; 17) entfernten Seite offen sind.

7. Elektrowerkzeug nach einem der Ansprüche 1 bis 6, **dadurch gekennzeichnet, daß** zwischen dem inneren Ende des Riegelelementes (18; 19) und dem Boden der Aussparung (16; 17) eine Druckfeder (20; 21) angeordnet ist.

8. Elektrowerkzeug nach einem der Ansprüche 1 bis 7, **dadurch gekennzeichnet, daß** seitlich am Werkzeuggehäuse (1, 2, 3) eine Abdeckung (8; 9) befestigt ist, die eine Durchtrittsöffnung (10; 11) aufweist, durch die der erste Arm (24; 25) des Betätigungselementes (22; 23) zugänglich ist.

9. Elektrowerkzeug nach Anspruch 8, **dadurch gekennzeichnet, daß** die Abdeckung (8; 9) einen Teil der Schienen- und Nutanordnung (36; 37, 54, 55) bildet.

10. Elektrowerkzeug nach einem der Ansprüche 1 bis 9, **dadurch gekennzeichnet, daß** zwei Riegelelemente (18; 19) in benachbarten Ausparungen (16, 17) angeordnet sind und daß jedes Riegelelement ein zugeordnetes Betätigungselement (22, 23) hat, das so angeordnet ist, daß die ersten Arme (24, 25) der Betätigungselemente (22, 23) an gegenüberliegenden Seiten des Werkzeuggehäuses (1, 2, 3) vorgesehen sind.

11. Elektrowerkzeug nach einem der Ansprüche 1 bis 10, **dadurch gekennzeichnet, daß** der werkzeugseitige Teil (36, 37) der Schienen- und Nutanordnung (36, 37, 54, 55) vor einem sich in normaler Funktionsstellung des Elektrowerkzeugs nach unten erstreckenden Griffbereich (2, 3, 4) des Werkzeuggehäuses (1, 2, 3) vorgesehen ist und sich die Schienen- und Nutanordnung zumindest in etwa parallel zur Längsachse (6) der Werkzeugaufnahme (7) des Elektrowerkzeugs erstreckt.

## Revendications

1. Outil mécanique à main alimenté par pile, en particulier un marteau, ayant un logement d'outil (1, 2, 3) qui contient un moteur électrique, forme une partie de préhension (2, 3, 4) et a un agencement profilé (36, 37, 54, 55) pour un montage amovible d'un bloc-piles rechargeable (50), logement d'outil dans lequel un dispositif de verrouillage est prévu comprenant au moins un élément de loquet (18 ; 19) déplaçable contre la tension d'un ressort hors d'une position de verrouillage dans lequel le bloc-piles (50) est verrouillé dans sa position opérationnelle sur le logement d'outil (1, 2, 3), l'élément de loquet dans sa position de verrouillage étant situé en engagement avec un retrait de loquet (52 ; 53) qui est prévu dans le logement du bloc-piles (50) dans la région de la partie (54, 55) formée dessus de l'agencement profilé (36, 37, 54, 55) et cet élément de loquet est déplaçable sensiblement perpendiculairement à la direction de fonctionnement de l'agencement profilé (36, 37, 54, 55), dans lequel sur le logement d'outil (1, 2, 3), de manière adjacente à l'agencement profilé, il est prévu une partie de cadre (15) qui comprend au moins un retrait (16 ; 17) pour recevoir un élément de loquet (18, 19) qui est déplaçable contre une force de ressort à partir d'une position de verrouillage dans laquelle l'élément de loquet s'étend plus encore dans le retrait, **caractérisé en ce que** latéralement en relation avec le retrait (16 ; 17) un élément opérationnel (22 ; 23) sous forme d'un levier à deux bras est monté de manière pivotante, un premier bras (24 ; 25) de ce levier est accessible pour être pivoté à la main et le deuxième bras (26 ; 27) de ce levier est engagé avec l'élément de loquet (18 ; 19) permettant à celui-ci d'être déplacé entre les positions de verrouillage et de déverrouillage, l'élément opérationnel (22, 23) soutenant l'élément de loquet (18 ; 19) contre un déplacement complet hors du retrait (16 ; 17).

2. Outil mécanique selon la revendication 1, **caractérisé en ce que** l'élément opérationnel (22 ; 23) est sous la forme d'un levier en forme de L.

3. Outil mécanique selon la revendication 1 ou 2, **caractérisé en ce que** le deuxième bras (26 ; 27) de l'élément opérationnel (22 ; 23) s'étend à travers une ouverture en forme de fente (44 ; 45) dans une paroi du retrait (16 ; 17).

4. Outil mécanique selon l'une quelconque des revendications 1 à 3, **caractérisé en ce que** le deuxième bras (26 ; 27) de l'élément opérationnel (22 ; 23) s'étend dans une ouverture d'engagement ouverte latéralement dans l'élément de loquet (18 ; 19).

5. Outil mécanique selon l'une quelconque des revendications 1 à 4, **caractérisé en ce que** l'axe de pivot de l'élément opérationnel (22 ; 23) est formé de deux broches de pivot (28, 30 ; 29, 31), qui sont coincées dans des manchons de support (32, 34 ; 33, 35) prévus sur le logement d'outil (1, 2, 3).

6. Outil mécanique selon la revendication 5, **caractérisé en ce que** les manchons de support (32, 34 ; 33, 35) sont ouverts sur leur côté éloigné du retrait (16 ; 17).

7. Outil mécanique selon l'une quelconque des revendications 1 à 6, **caractérisé en ce qu'**entre l'extrémité intérieure de l'élément de loquet (18 ; 19) et le fond du retrait (16 ; 17) un ressort de compression est agencé (20 ; 21).

8. Outil mécanique selon l'une quelconque des revendications 1 à 7, **caractérisé en ce qu'**un couvercle (8 ; 9) est fixé latéralement au logement d'outil (1, 2, 3) , ce couvercle ayant une ouverture de passage (10 ; 11) à travers laquelle le premier bras (24 ; 25) de l'élément opérationnel (22 ; 23) est accessible.

9. Outil mécanique selon la revendication 8, **caractérisé en ce que** le couvercle (8 ; 9) forme une partie de l'agencement profilé (36, 37, 54, 55).

10. Outil mécanique selon l'une quelconque des revendications 1 à 9, **caractérisé en ce que** deux éléments de loquet (18 ; 19) sont agencés dans des retraits adjacents (16, 17) et chaque élément de loquet a un élément opérationnel associé (22, 23) agencé de telle sorte que les premiers bras (24, 25) des éléments opérationnels (22, 23) soient situés sur des côtés opposés du logement d'outil (1, 2, 3).

11. Outil mécanique selon l'une quelconque des revendications 1 à 10, **caractérisé en ce que** la partie du côté outil (36, 37) de l'agencement profilé (36, 37, 54, 55) est prévue à l'avant d'une région de préhension (2, 3, 4) du logement d'outil (1, 2, 3), cette région de préhension s'étendant vers le bas dans la position de fonctionnement normale de l'outil mécanique, et cet agencement profilé s'étendant au moins approximativement en parallèle à l'axe longitudinal (6) du porte-outil (7) de l'outil mécanique.
